# EUROPEAN PATENT APPLICATION

(11) **EP 2 108 985 A1**
(43) Date of publication of application: **14.10.2009**
(21) Application number: 09157784.1
(22) Date of filing: 09.04.2009
(51) Int. Cl.: G02B 6/38

(54) **Fiber Optic Connector**

(30) Priority: 09.04.2008 US 99893
(71) Applicant: Lockheed Martin Corporation, Bethesda, MD 20817 (US)
(72) Inventor: Stewart, II, William L., Benbrook TX 76126 (US)
(74) Representative: Lockey, Robert Alexander

(57) **Abstract**

A fiber optic connector assembly.

## Description

This disclosure relates to fiber optic connectors.

According to a first aspect of the invention, we provide a fiber optic connector assembly, comprising a connector housing, a connector insert positioned within and removable from the connector housing defining a passageway comprising a first tapered inlet at one end of the insert, a second tapered inlet at another end of the insert, and an optical waveguide coupled between the first and second tapered inlets, a first optical fiber received within the first tapered inlet of the insert passageway, and a second optical fiber received within the second tapered inlet of the insert passageway.

The passageway of the connector insert may further comprise a first non-tapered inlet coupled to the first tapered inlet, and a second non-tapered inlet coupled to the second tapered inlet, wherein the optical waveguide is coupled between first and second non-tapered inlets.

The optical waveguide of the passageway of the connector insert may comprise a first tapered optical waveguide coupled to the first non-tapered inlet, a second tapered optical waveguide coupled to the second non-tapered inlet, and an intermediate optical waveguide coupled between the first and second tapered optical waveguides.

The optical waveguide of the passageway of the connector insert may comprise a first tapered optical waveguide coupled to the first tapered inlet, a second tapered optical waveguide coupled to the second tapered inlet, and an intermediate optical waveguide coupled between the first and second tapered optical waveguides.

According to a second aspect of the invention, we provide a removable insert for a fiber optic connector assembly, comprising a connector insert housing that defines a passageway comprising a first tapered inlet at one end of the insert, a second tapered inlet at another end of the insert, and an optical waveguide coupled between the first and second tapered inlets.

The passageway may further comprise a first non-tapered inlet coupled to the first tapered inlet, and a second non-tapered inlet coupled to the second tapered inlet, wherein the optical waveguide is coupled between the first and second non-tapered inlets.

The optical waveguide may comprise a first tapered optical waveguide coupled to the first non-tapered inlet, a second tapered optical waveguide coupled to the second non-tapered inlet, and an intermediate optical waveguide coupled between the first and second tapered optical waveguides.

The optical waveguide may comprise a first tapered optical waveguide coupled to the first tapered inlet, a second tapered optical waveguide coupled to the second tapered inlet, and an intermediate optical waveguide coupled between the first and second tapered optical waveguides.

According to a third aspect of the invention, we provide a circuit assembly may comprising a fiber optic connector assembly, comprising a connector housing, a connector insert positioned within and removable from the connector housing defining a passageway comprising, a first tapered inlet at one end of the insert, a second tapered inlet at another end of the insert, and an optical waveguide coupled between the first and second tapered inlets, a first optical fiber received within and coupled to the first tapered inlet of the insert passageway, and a second optical fiber received within and coupled to the second tapered inlet of the insert passageway, an optical interface operably coupled to the fiber optical connector assembly, and a circuit device operably coupled to the optical interface.

According to a fourth aspect of the invention, we provide a method of connecting a first optical fiber to a second optical fiber, comprising, inserting an end of the first optical fiber into a first opening in a connector housing, during the inserting of the end of the first optical fiber into the first opening in the connector housing, correcting for an offset of the first optical fiber, inserting an end of the second optical fiber into a second opening in the connector housing, and during the inserting of the end of the second optical fiber into the second opening in the connector housing, correcting for an offset of the second optical fiber.

The connector housing may comprise part of a fiber optic connector assembly according to the first aspect of the invention or a removable insert according to the second aspect of the invention.

According to a fifth aspect of the invention, we provide a method of operating an optical transmission system including a first optical fiber and a second optical fiber, comprising inserting an end of the first optical fiber into a first opening in a connector housing, during the inserting of the end of the first optical fiber into the first opening in the connector housing, correcting for an offset of the first optical fiber, inserting an end of the second optical fiber into a second opening in the connector housing, during the inserting of the end of the second optical fiber into the second opening in the connector housing, correcting for an offset of the second optical fiber, and transmitting optical signals from the first optical fiber to the second optical fiber using the connector housing.

The connector housing may comprise part of a fiber optic connector assembly according to the first aspect of the invention or a removable insert according to The second aspect of the invention.

The invention will now be described way of example only with reference to the accompanying drawings, wherein:

FIG. 1 is a fragmentary cross sectional view of an exemplary embodiment of a fiber optic connector assembly including a replaceable core insert.

FIGS. 2a-2b are fragmentary cross sectional views of an exemplary embodiment of the assembly of the fiber optic connector assembly of FIG. 1.

FIG. 3 is a schematic illustration of circuit assembly that includes at least a portion of the fiber optic connector assembly of FIG. 1.

In the drawings and description that follows, like parts are marked throughout the specification and drawings with the same reference numerals, respectively. The drawings are not necessarily to scale. Certain features of the invention may be shown exaggerated in scale or in somewhat schematic form and some details of conventional elements may not be shown in the interest of clarity and conciseness. The present invention is susceptible to embodiments of different forms. Specific embodiments are described in detail and are shown in the drawings, with the understanding that the present disclosure is to be considered an exemplification of the principles of the invention, and is not intended to limit the invention to that illustrated and described herein. It is to be fully recognized that the different teachings of the embodiments discussed below may be employed separately or in any suitable combination to produce desired results. The various characteristics mentioned above, as well as other features and characteristics described in more detail below, will be readily apparent to those skilled in the art upon reading the following detailed description of the embodiments, and by referring to the accompanying drawings.

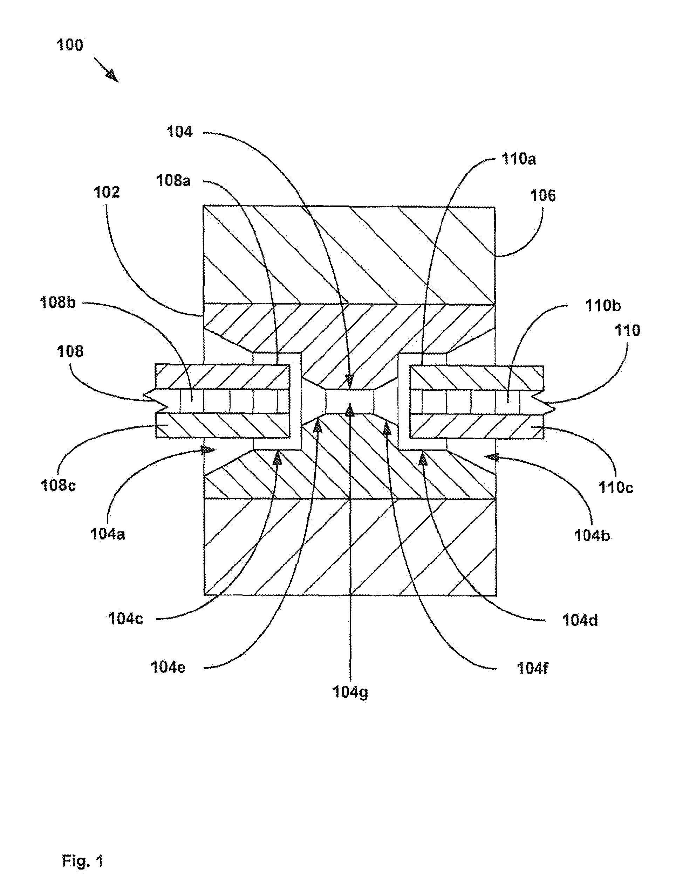

Referring initially to Fig. 1, an exemplary embodiment of a fiber optic connector assembly 100 includes a fiber optic core insert 102 that defines a passage 104 that includes tapered inlets, 104a and 104b, at opposite ends of the insert, non-tapered inlets, 104c and 104d, positioned proximate corresponding tapered inlets, tapered optical waveguides, 104e and 104f, positioned proximate corresponding non-tapered inlets, and a non-tapered optical waveguide 104g positioned between the tapered optical waveguides. In an exemplary embodiment, the interior surfaces of the tapered optical waveguides, 104e and 104f, and the intermediate non-tapered optical waveguide 104g are coated with a reflective material to permit the waveguides to contain optical signals within the waveguides.

The insert 102 may be positioned within and coupled to a conventional fiber optical connector 106. In an exemplary embodiment, the insert 102 may be removed from the connector 106 in order to permit the insert to be replaced, repaired, or otherwise maintained.

An end 108a of a conventional fiber optic fiber 108 may be received within and coupled to the non-tapered inlet 104c of the passage 104 of the insert 102 and an end 110a of a conventional fiber optic fiber 110 may be received within and coupled to the other non-tapered inlet 104d of the passage of the insert. In this manner, optical signals may be transmitted from the end 108a of the fiber 108 to the end 110a of the fiber 110 by transmitting the optical signals through the tapered optical waveguides, 104e and 104f, and the intermediate non-tapered optical waveguide 104g. In an exemplary embodiment, the inside diameter of the non-tapered inlet, 104c and 104d, of the passage 104 of the insert 102 are selected to minimize leakage of the optical signals through the annulus defined between the non-tapered inlets and the fibers, 108 and 110, respectively.

In an exemplary embodiment, the fiber 108 includes an inner core 108b through which the optical signals travel and an outer cladding 108c whose boundary reflects optical signals back into the core. Similarly, in an exemplary embodiment, the fiber 110 include an inner core 110b through which the optical signals travel and an outer cladding 110c whose boundary reflects optical signals back into the core. In an exemplary embodiment, the inside diameter of the waveguide 104g is approximately equal to the outside diameter of the inner cores, 108b and 110b, of the fibers, 108 and 110.

In an exemplary embodiment, during the operation of the connector assembly 100, optical signals may be transmitted from the end 108a of the fiber 108 to the end 110a of the fiber 110 by transmitting the optical signals through the core 108b of the fiber 108, into and through the hollow passage defined by the tapered optical waveguides, 104e and 104f, and the intermediate non-tapered optical waveguide 104g, and then into and through the core 110b of the fiber 110.

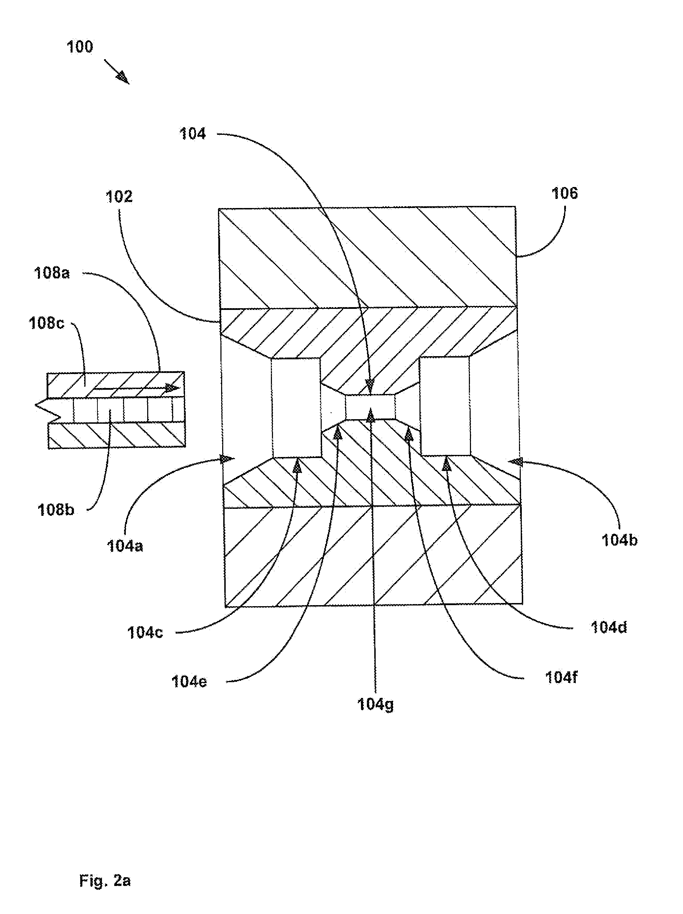

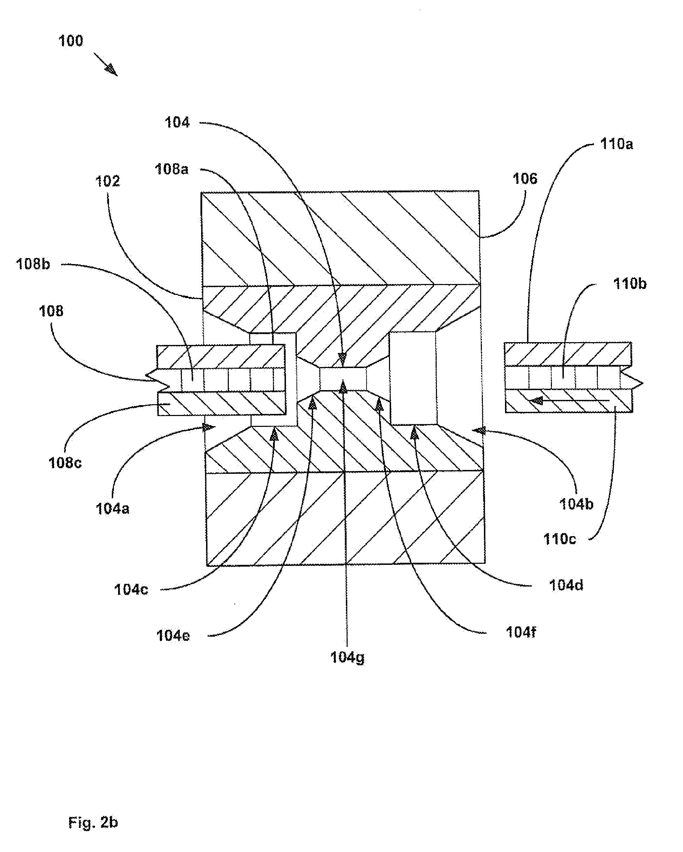

In an exemplary embodiment, as illustrated in Fig. 2a, during the assembly of the connector assembly 100, the end 108a of the fiber 108 is introduced into the non-tapered inlet 104c of the passage 104 of the insert 102 through the tapered inlet 104a of the passage. In this manner, any offset in the core 108b of the fiber 108 may be corrected when the fiber is inserted into the insert 102. In similar fashion, in an exemplary embodiment, as illustrated in Fig. 2b, during the assembly of the connector assembly 100, the end 110a of the fiber 110 is introduced into the non-tapered inlet 104d of the passage 104 of the insert 102 through the tapered inlet 104b of the passage. In this manner, any offset in the core 110b of the fiber 110 may also be corrected when the fiber is inserted into the insert 102. In this manner, the transmission of the optical signals through the assembly 100 is enhanced.

In an exemplary embodiment, one or both of the cores, 108b and 110b, of the fibers, 108 and 110, may be solid or hollow, or, if hollow, filled with a fluidic or gaseous optically transmissive material. In an exemplary embodiment, one or more of the tapered optical waveguides, 104e and 104f, and the intermediate non-tapered optical waveguide 104g may be filled with a solid optically transmissive material or hollow, or, if hollow, filled with a fluidic or gaseous optically transmissive material.

In an exemplary embodiment, the inside diameter of the optical waveguide 104 may be selected to permit the optical waveguide to provide an optical filter. In an exemplary embodiment, the inside diameter of the optical waveguide 104 is selected to be approximately ¼ the wavelength of the optical signal transmitted into the optical waveguide. In an exemplary embodiment, the optical waveguide 104 may inlude one or more of an optical filter, optical splitter, or other active or passive optical computing devices.

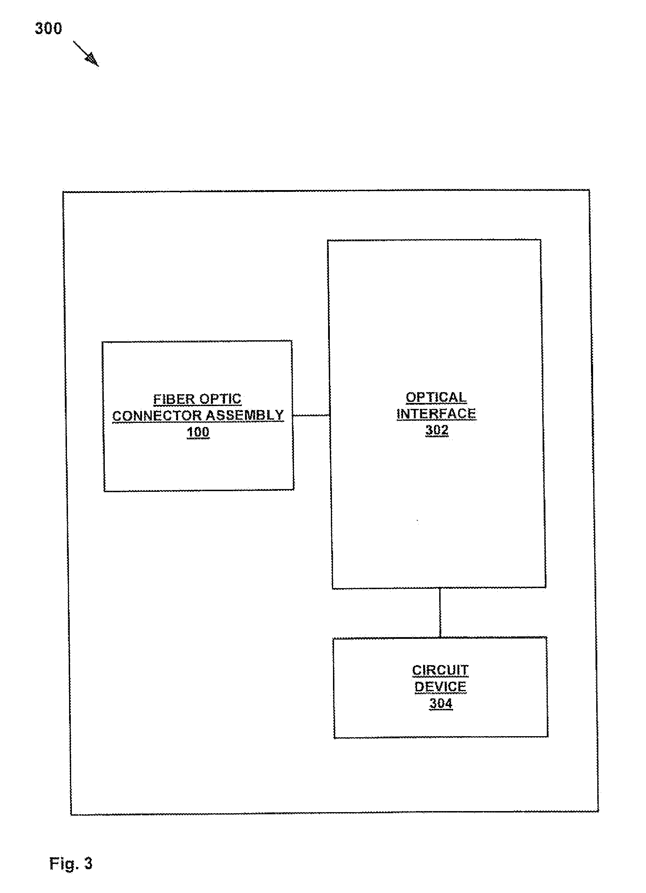

Referring now to FIG. 3, an exemplary embodiment of a circuit assembly 300 includes a conventional optical interface 302 operably coupled to the fiber optic connector assembly and a conventional circuit device 304. In an exemplary embodiment, the circuit device 304 may includes one or more optical computing devices. In an exemplary embodiment, at least a portion of the circuit assembly 300 provides an avionic control system for an aircraft.

It is understood that variations may be made in the above without departing from the scope of the invention. For example, the optical waveguides of the insert 102 may be used to transmit optical signals between optical fibers connected to the insert that have different core geometries and/or conductors. For example, the optical fibers connected to the insert 102 may have solid, fluidic, or gaseous optically conductive materials within their respective cores. Further, spatial references are for the purpose of illustration only and do not limit the specific orientation or location of the structure described above. While specific embodiments have been shown and described, modifications can be made by one skilled in the art without departing from the spirit or teaching of this invention. The embodiments as described are exemplary only and are not limiting. Many variations and modifications are possible and are within the scope of the invention. Accordingly, the scope of protection is not limited to the embodiments described, but is only limited by the claims that follow, the scope of which shall include all equivalents of the subject matter of the claims.

In the present specification "comprise" means "indudes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A fiber optic connector assembly, comprising:
a connector housing;
a connector insert positioned within and removable from the connector housing defining a passageway comprising:
a first tapered inlet at one end of the insert;
a second tapered inlet at another end of the insert; and
an optical waveguide coupled between the first and second tapered inlets;
a first optical fiber received within the first tapered inlet of the insert passageway; and
a second optical fiber received within the second tapered inlet of the insert passageway.

2. The assembly of claim 1, wherein the passageway of the connector insert further comprises:
a first non-tapered inlet coupled to the first tapered inlet; and
a second non-tapered inlet coupled to the second tapered inlet; and
wherein the optical waveguide is coupled between first and second non-tapered inlets.

3. The assembly of claim 2, wherein the optical waveguide of the passageway of the connector insert comprises:
a first tapered optical waveguide coupled to the first non-tapered inlet;
a second tapered optical waveguide coupled to the second non-tapered inlet; and
an intermediate optical waveguide coupled between the first and second tapered optical waveguides.

4. The assembly of claim 1, wherein the optical waveguide of the passageway of the connector insert comprises:
a first tapered optical waveguide coupled to the first tapered inlet;
a second tapered optical waveguide coupled to the second tapered inlet; and
an intermediate optical waveguide coupled between the first and second tapered optical waveguides.

5. A removable insert for a fiber optic connector assembly, comprising:
a connector insert housing that defines a passageway comprising:
a first tapered inlet at one end of the insert;
a second tapered inlet at another end of the insert; and
an optical waveguide coupled between the first and second tapered inlets.

6. The insert of claim 5, wherein the passageway further comprises:
a first non-tapered inlet coupled to the first tapered inlet; and
a second non-tapered inlet coupled to the second tapered inlet; and
wherein the optical waveguide is coupled between the first and second non-tapered inlets.

7. The insert of claim 6, wherein the optical waveguide comprises:
a first tapered optical waveguide coupled to the first non-tapered inlet;
a second tapered optical waveguide coupled to the second non-tapered inlet; and
an intermediate optical waveguide coupled between the first and second tapered optical waveguides.

8. The insert of claim 5, wherein the optical waveguide comprises:
a first tapered optical waveguide coupled to the first tapered inlet;
a second tapered optical waveguide coupled to the second tapered inlet; and
an intermediate optical waveguide coupled between the first and second tapered optical waveguides.

9. A circuit assembly, comprising:
a fiber optic connector assembly, comprising:
a connector housing;
a connector insert positioned within and removable from the connector housing defining a passageway comprising:
a first tapered inlet at one end of the insert;
a second tapered inlet at another end of the insert; and
an optical waveguide coupled between the first and second tapered inlets;
a first optical fiber received within and coupled to the first tapered inlet of the insert passageway; and
a second optical fiber received within and coupled to the second tapered inlet of the insert passageway;
an optical interface operably coupled to the fiber optical connector assembly; and
a circuit device operably coupled to the optical interface.

10. A method of connecting a first optical fiber to a second optical fiber, comprising:
inserting an end of the first optical fiber into a first opening in a connector housing;
during the inserting of the end of the first optical fiber into the first opening in the connector housing, correcting for an offset of the first optical fiber;
inserting an end of the second optical fiber into a second opening in the connector housing; and
during the inserting of the end of the second optical fiber into the second opening in the connector housing, correcting for an offset of the second optical fiber.

11. A method according to claim 10 wherein the connector housing comprises part of a fiber optic connector assembly according to any one of claims 1 to 4 or a removable insert according to any one of claims 5 to 8.

12. A method of operating an optical transmission system including a first optical fiber and a second optical fiber, comprising:
inserting an end of the first optical fiber into a first opening in a connector housing;
during the inserting of the end of the first optical fiber into the first opening in the connector housing, correcting for an offset of the first optical fiber;
inserting an end of the second optical fiber into a second opening in the connector housing;
during the inserting of the end of the second optical fiber into the second opening in the connector housing, correcting for an offset of the second optical fiber; and
transmitting optical signals from the first optical fiber to the second optical fiber using the connector housing.

13. A method according to claim 12 wherein the connector housing comprises part of a fiber optic connector assembly according to any one of claims 1 to 4 or a removable insert according to any one of claims 5 to 8.
